# EUROPEAN PATENT APPLICATION

(11) **EP 3 817 099 A1**
(43) Date of publication of application: **05.05.2021**
(21) Application number: 20204291.7
(22) Date of filing: 28.10.2020
(51) Int. Cl.: H01M 4/134, H01M 4/38, H01M 4/90, H01M 8/0206, H01M 12/06

(54) **CATHODE AND METAL-AIR BATTERY INCLUDING THE SAME**

(30) Priority: 30.10.2019 KR 20190136944
(71) Applicant: Samsung Electronics Co., Ltd., Gyeonggi-do 16677 (KR)
(72) Inventor: CHOI, Wonsung, 16678 Gyeonggi-do (KR); CHOI, Kyounghwan, 16678 Gyeonggi-do (KR)
(74) Representative: Elkington and Fife LLP

(57) **Abstract**

A cathode layer including a cathode carrier including a first material having a Young's modulus of 50 to 100 gigapascals (GPa), a shear modulus of 10 to 50 GPa, and an elongation of 30 % to 90 %; and an aqueous electrolyte in contact with the cathode carrier.

## Description

### FIELD OF THE INVENTION

The present disclosure relates to secondary batteries, and more particularly, to cathodes and metal-air batteries including the same.

### BACKGROUND OF THE INVENTION

A metal-air battery includes an anode capable of absorbing and releasing ions and a cathode using air as an active material. The metal-air battery may be a high-capacity battery because the metal-air battery uses a metal itself as an anode and does not need to store air, which is a cathode active material, in the battery. A theoretical specific energy of the metal-air battery may be 3,500 watt-hours per kilogram (Wh/kg) or greater, which is very high. The energy density of a metal-air battery may be approximately ten (10) times that of an energy density of a lithium ion battery. Nonetheless, there remains a need for an improved metal-air battery material.

### SUMMARY OF THE INVENTION

Provided are metal-air batteries having excellent performance.

Provided are metal-air batteries capable of decreasing or preventing the chemical deterioration and physical deformation of the metal-air batteries that can occur on charge and discharge. Provided are metal-air batteries having excellent charge and discharge characteristics.

Provided are metal-air batteries capable of solving the problems caused by an organic electrolyte.

Additional aspects will be set forth in part in the description which follows and, in part, will be apparent from the description, or may be learned by practice of the presented embodiments of the disclosure.

According to an aspect of an embodiment, a cathode layer includes: a cathode carrier including a first material having a Young's modulus of 50 to 100 gigapascals (GPa), a shear modulus of 10 to 50 GPa, and an elongation of 30 % to 90 %; and an aqueous electrolyte in contact with the cathode carrier.

The cathode carrier may further include a second material having a Young's modulus of greater than 100 GPa, a shear modulus of greater than 50GPa, and an elongation of less than 30 %, and the first material may be present in the cathode carrier in an amount of 50 volume percent (vol%) or greater.

The first material may include gold (Au).

The aqueous electrolyte may include at least one of Li₂SO₄, NH₄Cl, LiCI, or lithium bis(pentafluoroethansulfonyl)imide.

The cathode layer may further include a metal oxide on the cathode carrier.

The cathode carrier may have at least one of a planar shape, a porous planar shape, or a planar shape having a lattice structure.

According to an aspect of an embodiment, a metal-air battery includes: an anode layer including a metal; a solid electrolyte layer on the anode layer; and a cathode layer on the solid electrolyte layer, the cathode layer including a first material having a Young's modulus of 50 to 100 GPa, a shear modulus of 10 to 50 GPa, and an elongation of 30 % to 90 %.

The cathode layer may further include a second material having a Young's modulus of greater than 100 GPa, a shear modulus of greater than 50 GPa, and an elongation of less than 30 % or more, and the first material may be included in the cathode layer in an amount of 50 vol% or greater.

The first material may include gold (Au).

A total thickness of the cathode layer and the solid electrolyte layer may be 1 micrometer (µm) less.

The solid electrolyte layer may include at least one of a lithium aluminum titanium phosphate having a NASICON structure, a lithium lanthanum zirconium oxide having a garnet structure, or a lithium lanthanum titanium oxide having a perovskite structure.

The cathode layer may further include an aqueous electrolyte.

The aqueous electrolyte may include at least one of Li₂SO₄, NH₄Cl, LiCI, or lithium bis(pentafluoroethansulfonyl)imide.

The cathode layer may include an electrode that does not include an organic electrolyte.

The metal-air batter may further include a gas diffusion layer disposed on a surface of the cathode layer.

The metal-air batter may further include a metal oxide on cathode layer.

The cathode layer may have at least one of a planar shape, a porous planar shape, or a planar shape having a lattice structure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a cross-sectional view schematically illustrating an embodiment of a metal-air battery;
FIG. 2A is an enlarged cross-sectional view schematically illustrating an embodiment of a metal-air battery;
FIG. 2B is an enlarged cross-sectional view schematically illustrating an embodiment of a metal-air battery;
FIG. 3 is a scanning electron microscope ("SEM") image of a cathode layer in which a discharge product was produced;
FIG. 4 is a schematic view illustrating the structure of an embodiment of a lithium-air battery;
FIG. 5A is an SEM image of the cathode carrier of Example 1;
FIG. 5B is an enlarged view of the SEM image of FIG. 5A;
FIG. 6 is an SEM image of the cathode carrier of Comparative Example 1;
FIG. 7 is an SEM image of the cathode carrier of Comparative Example 3;
FIG. 8A is a graph of voltage (V vs Li/Li⁺) versus capacity (microampere hours per centimeter (µAh cm⁻¹) and milliampere hours per gram (mAh g⁻¹)) illustrating the results of evaluating cyclability by repeatedly performing charge and discharge experiments on the metal-air battery of Example 1; and
FIG. 8B is a graph of voltage (V vs Li/Li⁺) versus capacity (µAh cm⁻¹ and milliampere hours per grams of platinum (mAh g_{Pt}⁻¹)) illustrating the results of evaluating cyclability by repeatedly performing charge and discharge experiments on the metal-air battery of Comparative Example 1.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third," etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, "a first element," "component," "region," "layer," or "section" discussed below could be termed a second element, component, region, layer, or section without departing from the teachings herein.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

A cathode of a metal-air battery may be prepared by mixing a carbon-based conductive material and an organic electrolyte. When a carbon-based conductive material and an organic electrolyte are used, and while not wanting to be bound by theory, it is understood that lithium carbonate (Li₂CO₃) may be generated due to oxidation of the carbon-based conductive material, and the lifetime of the metal-air battery may be decreased by an irreversible reaction in which lithium carbonate (Li₂CO₃) may be decomposed.

Although an aqueous electrolyte may be used to counteract an irreversible reaction in which lithium carbonate (Li₂CO₃) may be decomposed, the chemical deterioration and physical deformation of the metal-air battery may occur due to the liquidity of a basic aqueous solution generated during decomposition of the aqueous electrolyte and an increase in volume of a reaction product during the decomposition of the aqueous electrolyte. The chemical deterioration and physical deformation of the metal-air battery may decrease performance of the metal-air battery and lifetime of the metal-air battery.

Hereinafter, a metal-air battery according to an embodiment will be described in further detail with reference to the accompanying drawings. The widths and thicknesses of layers and regions shown in the accompanying drawings may be exaggerated for clarity and convenience of description. Throughout the detailed description, like numbers refer to like elements.

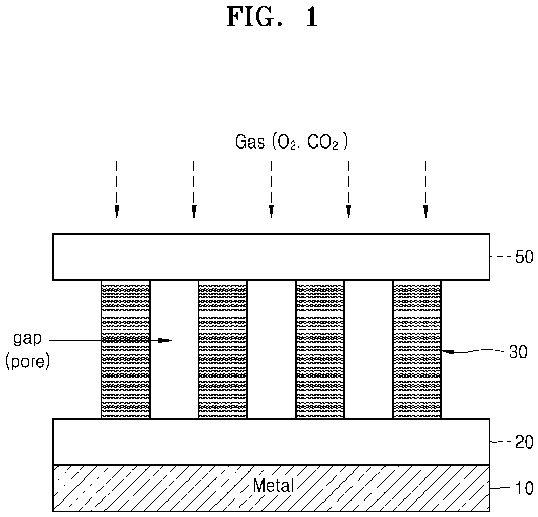

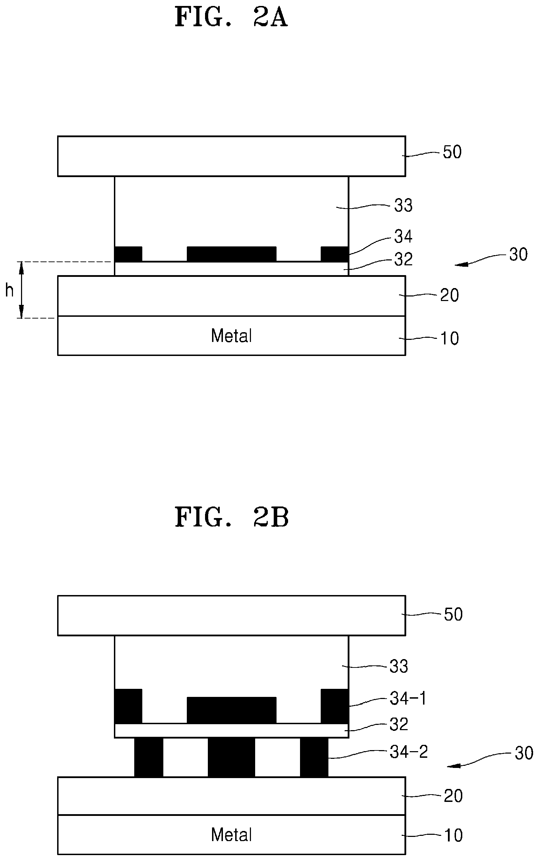

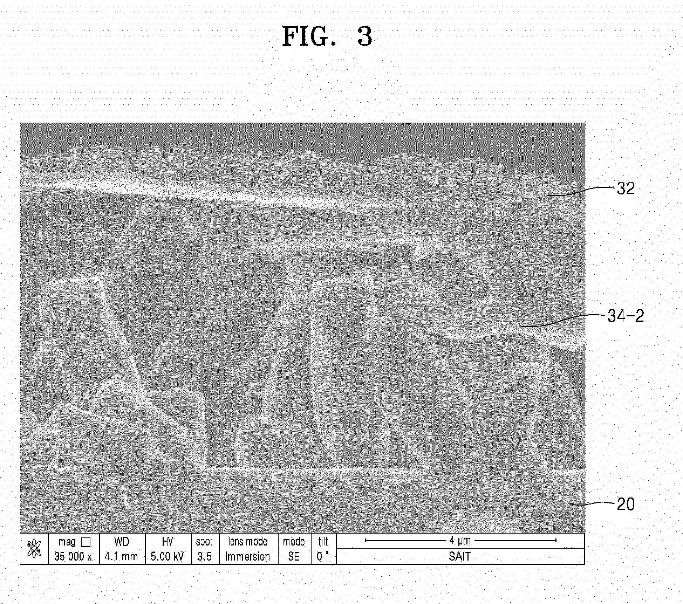

FIG. 1 is a cross-sectional view schematically illustrating a metal-air battery according to an embodiment. FIGS. 2A and 2B are enlarged cross-sectional views schematically illustrating a metal-air battery according to an embodiment. FIG. 3 is a scanning electron microscope ("SEM") image of a cathode layer in which a discharge product was produced.

Referring to FIGS. 1 and 2A, a metal-air battery may include an anode layer 10 including a metal and a cathode layer 30 spaced apart from the cathode layer 10. A solid electrolyte layer 20 may be provided between the anode layer 10 and the cathode layer 30. The metal-air battery may further include a gas diffusion layer 50 contacting at least one surface of the cathode layer 30. The gas diffusion layer 50 may serve to smoothly, e.g., efficiently or homogeneously, supply oxygen (O₂) to the cathode layer 30. The cathode layer 30 may be a cathode catalyst layer, and may be simply referred to as a cathode. In an aspect, the cathode layer 30 and the gas diffusion layer 50 may constitute a single cathode unit. In other words, the cathode unit of the metal-air battery may include the cathode layer 30, and, selectively, may further include the gas diffusion layer 50.

The anode layer 10 may include a material capable of absorbing and releasing metal ions, and may be simply referred to as an anode. Examples of the material may include at least one of lithium (Li), copper (Cu), sodium (Na), zinc (Zn), potassium (K), calcium (Ca), magnesium (Mg), iron (Fe), aluminum (Al), or an alloy thereof. For example, the anode layer 10 may include lithium (Li). In this case, the anode layer 10 may include at least one of lithium, a lithium-based alloy, or a lithium intercalation compound. When the anode layer 10 includes lithium, the metal-air battery according to an embodiment may be referred to as a lithium-air battery.

The cathode layer 30 may include a cathode carrier 32 and an aqueous electrolyte 33. The cathode carrier 32 is a support having malleability and ductility, and may support a metal oxide 34, which is a discharge product. For example, lithium hydroxide (LiOH), generated in the cathode unit during a discharge process, may be decomposed into lithium ions (Li⁺), water (H₂O), and oxygen (O₂), and a reverse reaction of the discharge reaction may proceed. As described above, an aqueous electrolyte 33 is used as the cathode electrolyte, thereby making a reversible reaction easier during a charge process. An overvoltage may be decreased during the charge process, and a charge voltage of the metal-air battery may be decreased, thereby increasing lifetime of the metal-air battery. However, the present disclosure is not limited thereto. The cathode layer 30 according to an embodiment may include a non-aqueous electrolyte, for example, tetraethylene glycol dimethyl ether ("TEGDME", C₁₀H₂₂O₅), and the cathode carrier 32 may support Li₂O₂, which is a discharge product. Further, the cathode carrier 32, according to an embodiment, may support a discharge product, such as sodium hydroxide (NaOH), calcium hydroxide (Ca(OH)₂), potassium hydroxide (KOH), or magnesium hydroxide (Mg(OH)₂).

As described above, the cathode carrier 32, according to an embodiment, may support the metal oxide 34, which is a discharge product generated during the discharge process, and the cathode carrier 32 may be damaged. In order to decrease or prevent damage to the cathode carrier 32 due to repetitive charge and discharge, the cathode carrier 32 may include a material having predetermined malleability and ductility. For example, the cathode carrier 32 may include a first material having a Young's modulus of 100 gigaPascals (GPa) or less, e.g., 50 to 100 GPa, 60 to 95 GPa, or 70 to 90 GPa, a shear modulus of 50 GPa or less, e.g., 10 to 50 GPa, 15 to 45 GPa, or 20 to 40 GPa, and an elongation of 30 % or greater, e.g., 30 % to 90 %, 35 % to 85 %, or 40 % to 80 %, for example, gold (Au). In this case, the cathode carrier 32 may include at least one of gold, a gold-based alloy, a gold intercalation compound, or a combination thereof. However, the present disclosure is not limited thereto, and the cathode carrier 32 may further include a second material having a Young's modulus of greater than 100 GPa, e.g., 100 to 500 GPa, 150 to 450 GPa, or 200 to 400 GPa, a shear modulus of greater than 50 GPa, e.g., 50 to 200 GPa, 55 to 150 GPa, or 60 to 100 GPa, and an elongation of less than 30 %, e.g., 1 % to 30 %, 5 % to 25 %, or 10 % to 20 %. The Young's modulus and the shear modulus of the first material are measured at the start of stress at 0-2% and 0-1 % respectively, and in traction at 10 mm/min and 2 mm/min respectively. Also, the elongation of the first material is measured from elongation percentage of the fraction performing a tension test of specimens having a width of 12.7 mm x and a gauge length of 50 mm at a crosshead speed of 50.8 mm/min under the standard IPC-TM-650 2.4.18B.

However, in this case, the cathode carrier 32 may include the first material in an amount of 50 volume percent (vol%) or greater, e.g., 50 to 99 vol%, 55 to 90 vol%, or 60 to 85 vol%, and damage of the cathode carrier 32 may be decreased or prevented during charge and discharge processes. The second material may include any suitable material, e.g., metal, having the disclosed Young's modulus, shear modulus, and elongation, such as, for example, iron (Fe), cobalt (Co), nickel (Ni), beryllium (Be), chromium (Cr), tungsten (W), platinum (Pt), an alloy thereof, an intercalation compound thereof, or a combination thereof.

Further, in an embodiment, the cathode carrier 32 may be provided in at least one of a planar shape extending along a plane, a porous planar shape including a plurality of pores, and a planar shape having a lattice structure. The cathode carrier 32 may more stably support the metal oxide 34, which is a discharge product. A thickness h of the solid electrolyte layer 20 and the cathode carrier 32 each independently may be 1 micrometer (µm) or less, e.g., 0.01 to 1 µm, 0.05 to 0.90 µm, or 0.1 to 0.85 µm. A thickness h of the solid electrolyte layer 20 and the cathode carrier 32 according to an embodiment may be 1 µm or less, e.g., 0.02 to 1 µm, 0.05 to 0.90 µm, or 0.1 to 0.85 µm. Accordingly, the metal-air battery having the cathode carrier 32 according to an embodiment may decrease or prevent chemical deterioration or physical destruction, while having excellent specific capacity, thereby decreasing or preventing performance deterioration and lifetime decrease of the metal-air battery. Details related to the aforementioned cathode carrier 32 will be described later with reference to FIGS. 2A to 3.

The aqueous electrolyte 33 may be an aqueous solution including, e.g., water, e.g., water vapor (H₂O), and a salt, e.g., at least one of Li₂SO₄, NH₄Cl, LiCl, or lithium bis(pentafluoroethansulfonyl)imide ("LiBETI"). The salt may have any suitable concentration, e.g., 0.01 to 2 molar (M), 0.1 to 1.5 M, or 0.2 to 1 M. In an embodiment, the aqueous electrolyte 33 may be disposed on the cathode carrier 32, and may comprise steam in which the water (H₂O) is a gas.

The solid electrolyte layer 20 may be disposed between the anode layer 10 and the aqueous electrolyte 33, and may have suitable lithium ion conductivity. The solid electrolyte layer 20 according to an embodiment may serve as a protective film to decrease or prevent moisture contained in the aqueous electrolyte 33 from directly contacting and/or reacting with lithium included in the anode layer 10.

In an embodiment, the solid electrolyte layer 20 may include an inorganic material containing at least one of a lithium ion conductive glass, a crystalline lithium ion conductive ceramic, a crystalline lithium ion conductive glass-ceramic. For example, the solid electrolyte layer 20 may include a lithium aluminum titanium phosphate ("LATP", e.g., Li₁₊ₐAlₐTi₂₋ₐ(PO₄)₃ wherein 0≤a≤2) having a NASICON structure (e.g., a structure isostructural to that of a sodium superionic conductor). In an embodiment, when the solid electrolyte layer 20 includes a material having a NASICON structure, even when the aqueous electrolyte 33 is included in the cathode layer 30 and water is present, the solid electrolyte layer 20 may not pass moisture, e.g., may have a suitable water vapor transmission rate, and thus the solid electrolyte layer 20 may serve as a protective film to decrease or prevent moisture included in the aqueous electrolyte 33 from directly contacting or reacting with lithium included in the anode layer 10.

Further, the ion conductivity of the solid electrolyte layer 20, including a material having a NASICON structure, may be improved as compared with the ion conductivity of the solid electrolyte layer 20 including a material having another structure. However, the present disclosure is not limited thereto, and the solid electrolyte layer 20 may include a lithium lanthanum zirconium oxide ("LLZO", e.g., LiₐLa₃Zr₂O₁₂ wherein a is about 7) having a garnet structure or a lithium lanthanum titanium oxide ("LLTO, e.g., La_{0.55}Li_{0.35}TiO₃) having a perovskite structure. Further, the solid electrolyte layer 20 may further include a polymer solid electrolyte component in addition to the glass-ceramic component. The polymer solid electrolyte may be a polyethylene oxide doped with a lithium salt, and may include at least one of LiN(SO₂CF₂CF₃)₂, LiBF₄, LiPF₆, LiSbF₆, LiAsF₆, LiClO₄, LiCF₃SO₃, LiN(SO₂CF₃)₂, LiN(SO₂C₂F₅)₂, LiC(SO₂CF₃)₃, LiN(SO₃CF₃)₂, LiC₄F₉SO₃, or LiAlCl₄ as the lithium salt.

The gas diffusion layer 50 may absorb oxygen and carbon dioxide in the atmosphere and provide the oxygen and the carbon dioxide to the anode layer 30. For this purpose, the gas diffusion layer 50 may have a porous structure to smoothly, e.g., efficiently or homogenously, diffuse oxygen and carbon dioxide. For example, the gas diffusion layer 50 may be comprise at least one of carbon paper, carbon cloth, or carbon felt, each comprising carbon fiber, or may comprise a metal, such as a sponge-shaped foamed metal mat or a metal fiber mat. The gas diffusion layer 50 may include a flexible porous material having a non-conductive property such as nonwoven fabric. However, the cathode layer 30 may be formed to have a porous structure or a structure similar to the porous structure so as to serve as the gas diffusion layer 50. In this case, the gas diffusion layer 50 may be omitted.

Although not shown in FIG. 1, an anode current collector contacting the anode layer 10 may be further provided. The anode current collector may be provided on the lower surface of the anode layer 10. Accordingly, the anode layer 10 may be disposed between the anode current collector and the solid electrolyte layer 20. The anode current collector may include at least one of copper (Cu), stainless steel ("SUS"), silver (Ag), or magnesium (Mg), or may include other conductor. A cathode current collector contacting the gas diffusion layer 50 may further be provided. The cathode current collector may be provided on the upper surface of the gas diffusion layer 50. Therefore, the gas diffusion layer 50 may be disposed between the cathode current collector and the cathode layer 30. The cathode current collector may include at least one of stainless steel ("SUS") or a porous carbon material. The SUS of the cathode current collector may have a mesh structure for permeating a gas such as air. The material of the cathode current collector is not limited to stainless steel ("SUS"), and may be variously changed. When the gas diffusion layer 40 is not used, the cathode current collector may contact the cathode layer 30. The anode current collector may be considered as a part of the anode unit. Similarly, the cathode current collector may be considered as a part of the cathode current collector.

Referring to FIGS. 2A and 2B, when the metal-air battery according to an embodiment is a lithium-air battery, during discharge, the following electrochemical reaction may occur at the cathode.

4Li⁺_{(dis.)} + O_{2(dis.)} + 2H₂O_{(dis.)} + 4e- → 4LiOH (solid)

A lithium ion (Li⁺) provided from the anode layer 10, oxygen (O₂) provided from the atmosphere (gas), and water vapor (H₂O) provided from the aqueous electrolyte 33 may be bonded to (e.g., contact or react with) an electron (e-) at a surface of the cathode carrier 32 to produce a first metal oxide 34-1 and a second metal oxide 34-2, which are solid. Here, the first metal oxide 34-1 and the second metal oxide 34-2 may be reaction products. However, when the aqueous electrolyte 33 is included in the cathode layer 30, a relatively large amount of a discharge product may be formed on the cathode carrier 32 compared to when an organic electrolyte is used, and the cathode carrier 32 may be deformed and deteriorated or destroyed.

In an embodiment, when the metal-air battery is discharged, as shown in FIG. 3, the second metal oxide 34-2, which is a discharge product, may be formed between the solid electrolyte layer 31 and the cathode carrier 32. As the second metal oxide 34-2, which is a discharge product, grows, expansion pressure may be applied to the anode carrier 32 having a thin film shape. When the cathode carrier 32 is cracked, deteriorated, or destroyed by the expansion pressure due to the growth of the second metal oxide 34-2, the performance of the metal-air battery may be deteriorated and the lifetime thereof may be reduced. The cathode carrier 32 according to an embodiment may include a first material, for example, gold (Au), having a physical ductility superior to other metals and metal oxides. Therefore, even when the second metal oxide 34-2, which is a discharge product, grows, the destruction of the cathode carrier 32 may be minimized, thereby decreasing or preventing the deterioration in performance of the metal-air battery and the reduction in the lifetime of the metal-air battery.

Further, in an embodiment, when the metal-air battery is discharged, as shown in FIG. 2B, the first metal oxide 34-1, which is a discharge product, may change the pH of the aqueous electrolyte 33 to be basic. As a content the first metal oxide 34-1, for example, lithium hydroxide (LiOH), which is a discharge product, is increased, the basicity of the aqueous electrolyte 33 may be enhanced. As the pH of the aqueous electrolyte 33 changes, the cathode carrier 32, including a metal, may be chemically deteriorated, so that the performance of the metal-air battery may be deteriorated and the lifetime of the metal-air battery may be reduced. The cathode carrier 32 according to an embodiment may include gold (Au), which is weak in reactivity with the basic solution. Accordingly, even when the first metal oxide 34-1, which is a discharge product, grows, the chemical deterioration of the cathode carrier 32 may be minimized, and thus, the deterioration in performance of the metal-air battery and the reduction in the lifetime of the metal-air battery may be decreased or prevented.

When the metal-air battery according to an embodiment is a lithium-air battery, during charge, the following electrochemical reaction may occur in the aqueous electrolyte 33. 4LiOH _{(dis.)} → 4Li⁺_{(dis.)} +2H₂O_{(dis.)} + O_{2(dis.)} + 4e⁻

The first metal oxide 34-1 and the second metal oxide 34-2 generated from the cathode unit may be decomposed into lithium ions (Li ⁺), water (H₂O), and oxygen (O₂), and a reverse reaction of the discharge reaction may proceed. According to an embodiment, the aqueous electrolyte 33 is used as a cathode electrolyte, thereby making an irreversible reaction easier during a charge process, the irreversible reaction in which lithium carbonate (Li₂CO₃) may be decomposed during the charge process of the metal-air battery. Thus, an overvoltage may be decreased during the charge process, and the charge voltage of the metal-air battery may be decreased, thereby increasing the lifetime of the metal-air battery.

As described above, the cathode layer 30 may include the aqueous electrolyte 33, thereby making a reverse reaction for decomposing a reaction product during the charge process easier. In addition, because the cathode carrier 32 includes gold (Au), the specific capacity of the metal-air battery may be improved, and the chemical deterioration and physical destruction caused by discharge products may be prevented to decrease or prevent the performance deterioration and the lifetime reduction of the metal-air battery.

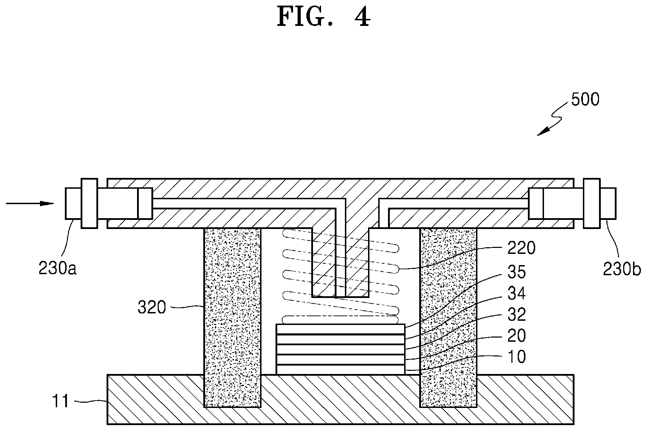

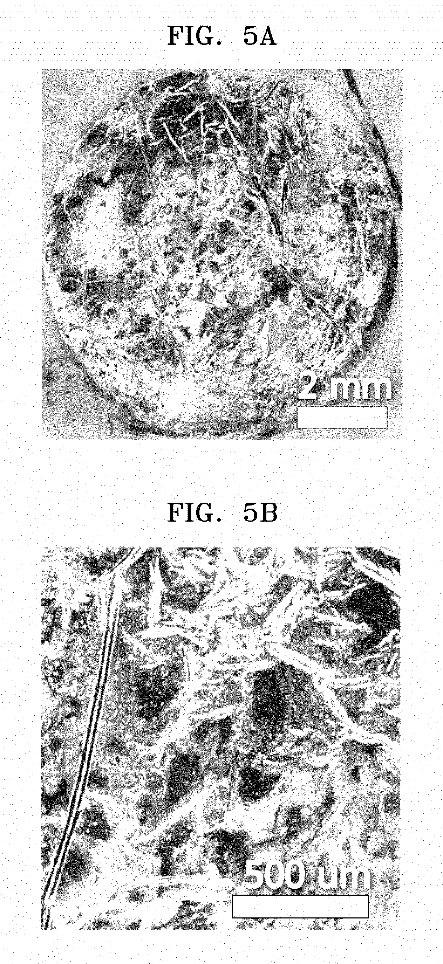

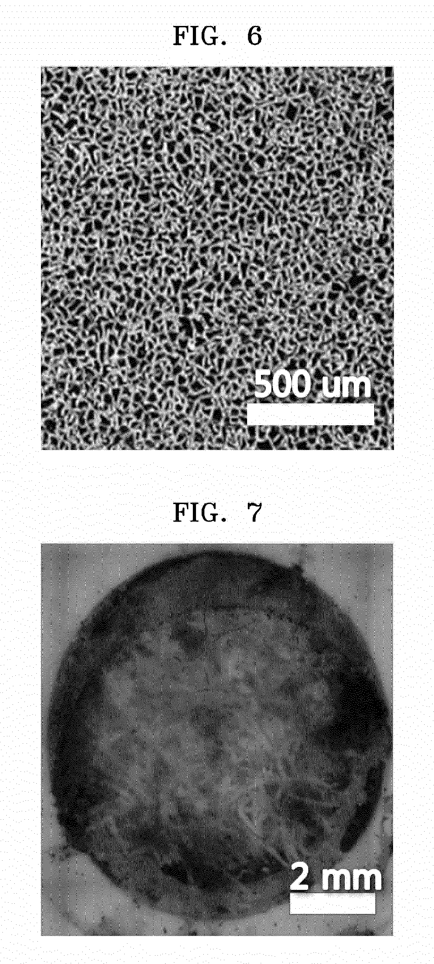

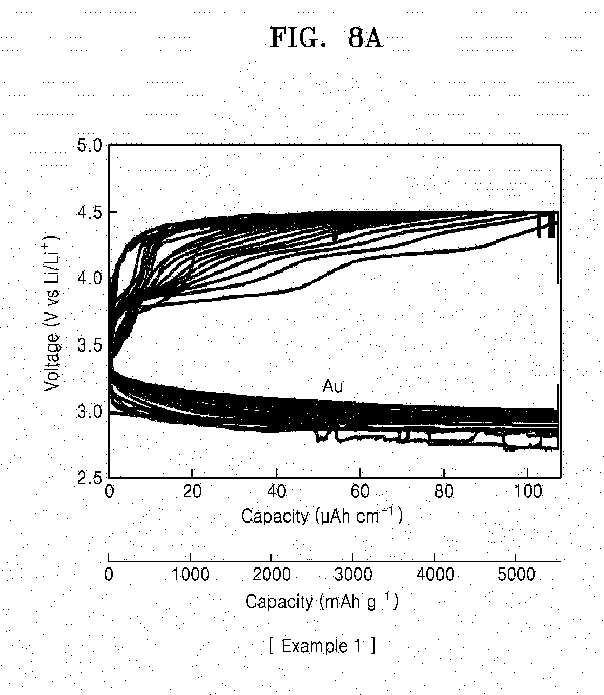

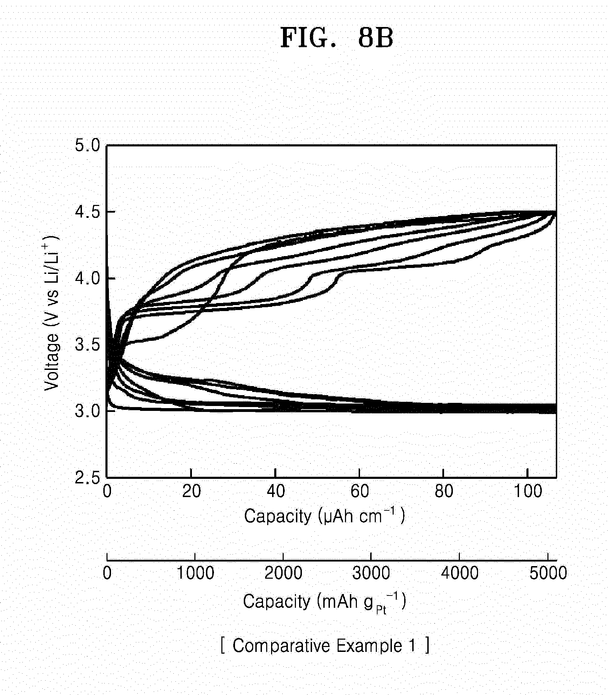

FIG. 4 is a schematic view illustrating the structure of a lithium-air battery according to an embodiment. FIG. 5A is an SEM image of the cathode carrier of Example 1. FIG. 5B is an enlarged view of the SEM image of FIG. 5A. FIG. 6 is an SEM image of the cathode carrier of Comparative Example 1. FIG. 7 is an SEM image of the cathode carrier of Comparative Example 3. FIG. 8A is a graph illustrating the results of evaluating cyclability by repeatedly performing charge and discharge experiments on the metal-air battery of Example 1. FIG. 8B is a graph illustrating the results of evaluating cyclability by repeatedly performing charge and discharge experiments on the metal-air battery of Comparative Example 1.

A lithium-air battery 500 according to an embodiment includes a lithium-containing anode layer 10 adjacent to an anode current collector 11, a cathode layer adjacent to a cathode current collector 35, and a solid electrolyte layer 20 between the anode layer 10 and the cathode layer 30. In an embodiment, the solid electrolyte layer 20 may function as a separator including a solid electrolyte. An aqueous electrolyte 33 may be disposed in the form of a steam atmosphere. A metal oxide 34, which is a discharge product, may be supported on a cathode carrier 32. The cathode carrier 32 is disposed and supported on the solid electrolyte layer 20. The cathode current collector 35 may also serve as a porous gas diffusion layer capable of diffusing air. A press member 220 is disposed on the cathode current collector 35 to transmit air to the cathode. A case 320, which is made of an insulating resin material, is interposed between the cathode layer 30 and the anode layer 10 to electrically separate the cathode layer 30 and the anode layer 10. Air is supplied into an air inlet 230a, and is discharged to an air outlet 230b. The lithium-air battery may be stored in a stainless steel container.

The "air" in the lithium air battery according to an embodiment means a combination of gases having a suitable oxygen content, e.g., an oxygen content of 1 to 99 vol%, 2 to 95 vol%, 4 to 90 vol%, 5 to 40 vol%, 10 to 30 vol%, or 15 to 25 vol%. In an embodiment, a suitable combination of gases in the lithium air battery may have an oxygen content of 99 vol% or greater, e.g., 99 to 99.999 vol%, 99.1 to 99.99 vol%, or 99.2 to 99.9%.

### EXAMPLES

### Manufacture of lithium-air battery

### Example 1: Manufacture of lithium-air battery

A lithium metal foil having a thickness of 100 micrometers (µm), as an anode, was disposed on a copper thin film as an anode current collector, and a liquid electrolyte, which is an anode intermediate layer, was disposed on the anode. The liquid electrolyte was prepared by mixing 2 microliters (µL) of lithium bis(trifluoromethylsulfonyl)imide ("LiTFSI") with 1 mole (mol) of tetraethylene glycol dimethyl ether ("TEGDME").

A cathode carrier (thickness 10 nanometers (nm), area 0.5 square centimeters (cm²)) made of gold (Au) was disposed on a lithium aluminum titanium phosphate ("LATP") film, which is a solid electrolyte layer, using a sputtering process. A gas diffusion layer (25BC, manufactured by SGL Co., Ltd.) was disposed at the upper end of a cathode, a nickel mesh was disposed on the gas diffusion layer, the gas diffusion layer provided with the nickel mesh was disposed on the liquid electrolyte, and the anode and the cathode were fixed, e.g., adhered to one-another. The nickel mesh disposed on the gas diffusion layer was pressed by a press member for transmitting air to the cathode to fix the cells, thereby manufacturing a lithium-air battery.

### Example 2

A lithium-air battery was manufactured in the same manner as in Example 1, except that a cathode carrier was made of gold (Au) and had a thickness of 100 nanometers (nm).

### Comparative Example 1

A lithium-air battery was manufactured in the same manner as in Example 1, except that a cathode carrier was made of platinum (Pt).

### Comparative Example 2

A lithium-air battery was manufactured in the same manner as in Example 1, except that a cathode carrier was made of platinum (Pt) and had a thickness of 100 nm.

### Comparative Example 3

A lithium-air battery was manufactured in the same manner as in Example 1, except that a cathode carrier was made of ruthenium (Ru).

### Comparative Example 4

A lithium-air battery was manufactured in the same manner as in Example 1, except that a cathode carrier was made of ruthenium oxide (RuO₂).

### Comparative Example 5

A lithium-air battery was manufactured in the same manner as in Example 1, except that a cathode carrier was made of silver (Ag).

### Comparative Example 6

A lithium-air battery was manufactured in the same manner as in Example 1, except that a cathode carrier was made of silver oxide (Ag₂O).

### Evaluation Example 1

Battery capacities of the lithium-air batteries of Examples 1 and 2 and Comparative Examples 1 to 6 per cathode carrier and charge-discharge cycles thereof are given in Table 1 below. The lithium-air batteries of Examples 1 and 2 and Comparative Examples 1 to 6 were charged and discharged under the conditions of a temperature of 40 °C, a relative humidity of 100 %, an oxygen atmosphere of 99 %, a minimum current density of 10 µA/cm², a cut-off voltage of 2.2 volts (V) to 4.5 V, and cycled using a constant current-constant voltage ("CCCV") mode.

**Table 1**

| | Cathode carrier | Thickness of cathode carrier | Battery capacity per gram cathode carrier | Charge-discharge cycle |
|---|---|---|---|---|
| Example 1 | Au | 10 nm | 5,554 milliampere hours per gram (mAh/g) | 33 |
| Example 2 | Au | 100 nm | 555 mAh/g | 60 |
| Comparative Example 1 | Pt | 10 nm | 4,998 mAh/g | 7 |
| Comparative Example 2 | Pt | 100 nm | 500 mAh/g | 5 |
| Comparative Example 3 | Ru | 10 nm | 8,645 mAh/g | 9 |
| Comparative Example 4 | RuO₂ | 10 nm | 32,584 mAh/g | 9 |
| Comparative Example 5 | Ag | 10 nm | 10,219 mAh/g | 0 |
| Comparative Example 6 | Ag₂O | 10 nm | 15,014 mAh/g | 0 |

Referring to FIGS. 5A and 5B, in the metal-air battery of Example 1, the state of gold (Au) used as the cathode carrier 32 may be observed. In the case of the cathode carrier 32, which has undergone a charge-discharge cycle in the metal-air battery of Example 1, the cathode carrier 32 maintains a shape on a micrometer scale, as shown in FIG. 5B, without cracks or destruction. The metal oxide 34 is stably produced and supported on the upper and lower sides of the cathode carrier 32 during the discharge process, thereby maintaining the cyclability of the charge-discharge cycle.

In contrast, referring to FIG. 6, in the metal-air battery of Comparative Example 1, the state of gold (Au) used as the cathode carrier 32 may be observed. In the case of the cathode carrier 32, which has undergone a charge and discharge cycle in the metal-air battery of Comparative Example 1, a large number of cracks on a micrometer scale occur. Thus, the metal oxide 34 is not stably produced and supported on the upper and lower sides of the cathode carrier 32 during the discharge process, thereby not maintaining the cyclability of the charge-discharge cycle.

Further, referring to FIG. 7, in the metal-air battery of Comparative Example 3, the state of ruthenium (Ru) used as the cathode carrier 32 may be observed. In the case of the cathode carrier 32 which has undergone a charge-discharge cycle in the metal-air battery of Comparative Example 3, the cathode carrier 32 is destroyed and the solid electrolyte layer 31 disposed under the cathode carrier 32 may be observed. Thus, the discharge product may not be stably supported, and the cyclability of the charge-discharge cycle may not be maintained.

Referring to Table 1 and FIG. 8A, the cyclability of the charge-discharge cycle is maintained such that the charge-discharge cycles of the metal-air battery of Example 1 proceed 33 times. In contrast, referring to Table 1 and FIG. 8B, the cyclability of the charge-discharge cycle is maintained such that the charge-discharge cycles of the metal-air battery of Comparative Example 1 proceed seven (7) times. Further, the metal-air battery of Example 1 may have a higher battery capacity per cathode carrier than the metal-air battery of Comparative Example 1.

Further, comparing the charge and discharge cycles of the metal-air battery of Example 1 and the metal-air battery of Example 2, in Example 2 including a thick cathode carrier 32, the physical rigidity of the cathode carrier 32 is secured, and thus, the cyclability of the charge-discharge cycle is better maintained. In contrast, the metal-air battery of Example 2 including a relatively heavy cathode carrier 32 has a lower battery capacity than the metal-air battery of Example 1.

While many details are set forth in the foregoing description, they should be construed as illustrative of specific embodiments rather than to limit the scope of the disclosure. For example, those skilled in the art will appreciate that the structure of the metal-air battery described above may be variously modified. Therefore, the scope of the disclosure should not be defined by the described embodiments, but should be determined by the scope defined by the claims.

A metal-air battery having excellent performance may be implemented. A metal-air battery having excellent charge and discharge characteristics may be implemented. A metal-air battery capable of solving the problems caused by chemical deterioration and physical destruction due to charge and discharge may be implemented. A metal-air battery capable of decreasing or preventing the problems caused by organic electrolytes may be implemented.

It should be understood that embodiments described herein should be considered in a descriptive sense only and not for purposes of limitation. Descriptions of features or aspects within each embodiment should be considered as available for other similar features or aspects in other embodiments. While an embodiment has been described with reference to the figures, it will be understood by those of ordinary skill in the art that various changes in form and details may be made therein without departing from the scope as defined by the following claims.

## Claims

1. A cathode layer, comprising:
a cathode carrier comprising a first material having a Young's modulus of 50 to 100 gigapascals, a shear modulus of 10 to 50 gigapascals, and an elongation of 30 % to 90 %.

2. The cathode layer of claim 1, wherein
the cathode carrier further comprises a second material having a Young's modulus of greater than 100 gigapascals, a shear modulus of greater than 50 gigapascals, and an elongation of less than 30 %, and
the first material is present in the cathode carrier in an amount of 50 volume percent or greater.

3. The cathode layer of claims 1 or 2, wherein the first material comprises gold.

4. The cathode of any of claims 1-3, further comprising an aqueous electrolyte in contact with the cathode carrier;
preferably wherein
the aqueous electrolyte comprises at least one of Li₂SO₄, NH₄Cl, LiCI, or lithium bis(pentafluoroethansulfonyl)imide.

5. The cathode layer of any of claims 1-4, further comprising a metal oxide on the cathode carrier.

6. The cathode layer of any of claims 1-5, wherein the cathode carrier has at least one of a planar shape, a porous planar shape, and a planar shape having a lattice structure.

7. A metal-air battery comprising:
an anode layer comprising a metal;
a solid electrolyte layer on the anode layer; and
a cathode layer on the solid electrolyte layer, the cathode layer comprising a first material having a Young's modulus of 50 to 100 gigapascals, a shear modulus of 10 to 50 gigapascals, and an elongation of 30 % to 90 %.

8. The metal-air battery of claim 7, wherein
the cathode layer further comprises a second material having a Young's modulus of greater than 100 gigapascals, a shear modulus of greater than 50 gigapascals, and an elongation of less than 30 %, and
the first material is present in the cathode layer in an amount of 50 volume percent or greater.

9. The metal-air battery of claims 7 or 8, wherein the first material comprises gold.

10. The metal-air battery of any of claims 7-9, wherein a total thickness of the cathode layer and the solid electrolyte layer is 1 micrometer or less.

11. The metal-air battery of any of claims 7-10, wherein the solid electrolyte layer comprises at least one of a lithium aluminum titanium phosphate having a NASICON structure, a lithium lanthanum zirconium oxide having a garnet structure, or a lithium lanthanum titanium oxide having a perovskite structure.

12. The metal-air battery of any of claims 7-11, wherein the cathode layer further comprises
an aqueous electrolyte;
preferably wherein the aqueous electrolyte comprises at least one of Li₂SO₄, NH₄Cl, LiCI, or lithium bis(pentafluoroethansulfonyl)imide.

13. The metal-air battery of any of claims 7-12, wherein the cathode layer comprises an electrode that does not comprise an organic electrolyte.

14. The metal-air battery of any of claims 7-13, further comprising:
a gas diffusion layer disposed on a surface of the cathode layer.

15. The metal-air battery of any of claims 7-14, further comprising a metal oxide on the cathode layer; and/or
wherein the cathode layer has at least one of a planar shape, a porous planar shape, or a planar shape having a lattice structure.
